# EUROPÄISCHE PATENTSCHRIFT

(11) **EP 3 585 720 B1**
(45) Veröffentlichungstag und Bekanntmachung des Hinweises auf die Patenterteilung: **07.10.2020**
(21) Anmeldenummer: 17706736.0
(22) Anmeldetag: 21.02.2017
(51) Int. Cl.: B66F 9/22, F16F 9/512

(54) **FANGZYLINDER FÜR EIN LASTHEBEMITTEL SOWIE LASTHEBEMITTEL MIT EINEM FANGZYLINDER**
CATCHING CYLINDER FOR A LOAD LIFTING DEVICE, AS WELL AS LOAD LIFTING DEVICE WITH A CATCHING CYLINDER
CYLINDRE DE RETENUE POUR UN DISPOSITIF DE LEVAGE DE CHARGES, AINSI QUE DISPOSITIF DE LEVAGE DE CHARGES AVEC UN CYLINDRE DE RETENUE

(43) Veröffentlichungstag der Anmeldung: 01.01.2020
(73) Patentinhaber: Flexlift Hubgeräte GmbH, 33609 Bielefeld (DE); MBS-Hydraulik GmbH & Co. Kommanditgesellschaft, 32312 Lübbecke (DE)
(72) Erfinder: LIEBKE, Karsten, 32312 Lübbecke (DE)
(74) Vertreter: Schober, Mirko
(86) Internationale Anmeldenummer: PCT/EP2017/053962
(87) Internationale Veröffentlichungsnummer: WO 2018/153438

(56) Entgegenhaltungen:
- EP-A1- 0 580 147
- EP-A2- 1 857 404
- CN-A- 1 699 781
- CN-U- 205 744 685
- DE-A1- 3 419 364
- DE-A1-102013 110 924
- DE-U1- 29 822 443
- JP-A- S56 128 208
- US-A- 5 277 281
- US-A- 5 711 514
- US-A1- 2004 145 099
- US-A1- 2006 180 418
- US-A1- 2008 250 844

## Beschreibung

### TECHNISCHES GEBIET

Die Erfindung betrifft einen Fangzylinder für ein Lasthebelmittel, insbesondere Scherenhubtisch, nach dem Oberbegriff des Anspruchs 1. Weiterhin betrifft die Erfindung ein Lasthebemittel mit einem solchen Fangzylinder mit den Merkmalen des Anspruchs 12.

### STAND DER TECHNIK

Lasthebemittel dienen zum Anheben von Lasten, wie etwa von Bauteilen, Gütern und Personen. Hierbei wird beispielsweise eine als Arbeitsfläche oder Plattform dienender Oberrahmen auf die gewünschte Höhe über einem Boden bzw. Untergrund angehoben oder abgesenkt. Beispielsweise bei Hubtischen ist oftmals ein Scherenantrieb vorgesehen, bei dem wenigstens ein Scherengestänge zum Einsatz kommt. Dieses weist zwei gekreuzte und im Kreuzungspunkt gelenkig miteinander verbundene Elemente auf, so dass die Veränderung des zwischen diesen Elementen eingeschlossenen Winkels zur Ausführung der Hubbewegung genutzt werden kann. Die Relativbewegung zwischen den Elementen eines Scherenantriebes kann beispielsweise über wenigstens einen zwischen diesen wirkenden Linearantrieb, wie etwa einen Hubzylinder, oder mindestens ein entsprechend umgelenktes Zugmittel, wie etwa einen Antriebsriemen, erfolgen.

Da derartige Lasthebemittel in der Regel keinen selbsthemmenden Antrieb besitzen, kann ein Defekt, wie beispielsweise das Reißen eines oder mehrerer Antriebsriemen, zu dessen plötzlichem Kollabieren führen. Gemäß der derzeit gültigen harmonisierten europäischen Norm für Scherenhubtische (EN 1570) sind daher geeignete Sicherheitseinrichtungen vorzusehen, die einen unvorhergesehenen Absturz des Oberrahmens wirksam verhindern sollen. Neben einem hierdurch entstehenden Sachschaden gilt es insbesondere eine mögliche Verletzung von auf oder gar unter dem Oberrahmen befindlichen Personen auszuschließen. Hierzu haben sich selbsthemmende, zumeist hydraulische Fangvorrichtungen etabliert, die beispielsweise beim Auftreten einer zu schnellen Relativbewegung zwischen den Elementen eines Scherenantriebes diese innerhalb kürzester Zeit unterbinden.

Aus DE 298 22 443 U1 ist eine Absturzsicherung für Hubtische sowie Hebebühnen und dergleichen bekannt, die den Aufbau eines zwischen den relativbeweglichen Elementen anzuordnenden Fangzylinders beschreibt. Dieser umfasst ein Gehäuse in Form eines Zylinderrohres, in dem ein mit einer Kolbenstange verbundener Kolben linear beweglich geführt ist. Ein inneres Volumen des Gehäuses ist so in zwei durch den Kolben voneinander getrennte Fluidkammern unterteilt, welche über eine außerhalb des Gehäuses angeordnete Leitung fluidleitend miteinander verbunden sind. Innerhalb der Leitung ist ein Sperrventil angeordnet, welches bei Überschreitung eines Ansprechwertes für den zwischen den Fluidkammern möglichen Fluidvolumenstrom die Leitung absperrt. Im abgesperrten Zustand des Sperrventils ist kein Fluidaustausch zwischen den Fluidkammern mehr möglich, so dass das ansonsten mögliche Ein- oder Ausfahren der Kolbenstange aus dem Gehäuse unterbunden wird. Im Ergebnis ist der Fangzylinder in seiner ansonsten linearen Beweglichkeit gehemmt, so dass die Relativbewegung beispielsweise zwischen den beweglichen Elementen eines Hubtisches unterbrochen und somit der Absturz seines Oberrahmens wirksam verhindert ist.

Natürlich benötigt der Fangzylinder ausreichenden Bauraum, um dessen notwendige Komponenten in dem jeweiligen Lasthebemittel zu integrieren. Eine Anpassung des Fangzylinders an individuelle Ausgestaltungen und räumliche Verhältnisse vor Ort ist zudem nur schwer oder gar nicht möglich.

### DIE ERFINDUNG

Vor diesem Hintergrund liegt der vorliegenden Erfindung die Aufgabe zugrunde, eine Sicherheitseinrichtung in Form eines Fangzylinders sowie ein mit einem solchen Fangzylinder ausgestattetes Lasthebemittel dahingehend weiterzuentwickeln, dass der Fangzylinder insgesamt einfacher in ein Lasthebemittel integrierbar ist und eine kompaktere Bauweise für das Lasthebemittel ermöglicht.

Die Lösung dieser Aufgabe besteht nach der Erfindung in einem Fangzylinder mit den Merkmalen von Anspruch 1. Vorteilhafte Weiterbildungen sind Inhalt der abhängigen Ansprüche.

Weiterhin wird diese Aufgabe mit einem Lasthebemittel gemäß den Merkmalen von Anspruch 12 gelöst.

Der erfindungsgemäße Fangzylinder ist als Sicherheitseinrichtung in ein Lasthebemittel integrierbar und eignet sich in besonders bevorzugter Weise für eine Integration zwischen zwei Elemente des Lasthebemittels, die sich während einer Hubbewegung des Lasthebemittels relativ zueinander verlagern. Auf diese Weise kann die Relativbewegung bei in einer kritischen Situation bevorzugt selbsttätig aktiviertem Fangzylinder beendet werden, um einen begonnenen Absturz des Lasthebemittels innerhalb kürzester Zeit aufzuhalten. Besonders bevorzugt kann es sich bei dem mit einem solchen Fangzylinder ausstattbaren Lasthebemittel um einen Scherenhubtisch handeln. Selbstverständlich eignet sich der erfindungsgemäße Fangzylinder auch für andere Ausführungsformen eines Lasthebemittels.

Der erfindungsgemäße Fangzylinder umfasst ein Gehäuse sowie eine Kolbenstange, welche mit einem innerhalb des Gehäuses linear beweglich geführten Kolben verbunden ist. Die Erfindung geht davon aus, dass der Fangzylinder in besonders bevorzugter Weise über sein Gehäuse mit einem der relativ zueinander beweglichen Elemente eines Lasthebemittels koppelbar ist, während dessen Kolbenstange zur Kopplung mit einem anderen Element dient. Dabei erstreckt sich der Fangzylinder in seinem eingebauten Zustand zwischen den relativ zueinander beweglichen Elementen eines Lasthebemittels. Der innerhalb des Gehäuses angeordnete Kolben dient zur Ausbildung zweier gegeneinander abgegrenzter Fluidkammern, indem der Kolben eine an sich baulich einzelne Kammer in eine erste Fluidkammer und eine zweite Fluidkammer unterteilt. Deren jeweiliges Volumen ist durch eine lineare Verlagerung des Kolbens veränderbar, so dass eine Volumenzunahme der ersten Fluidkammer zu einer Volumenabnahme der zweiten Fluidkammer führt und umgekehrt.

Hierzu sind die beiden Fluidkammern über eine Verbindung fluidleitend miteinander verknüpft, wobei in diese Verbindung ein Sperrventil zwischen den beiden Fluidkammern angeordnet ist. Das Sperrventil ist dazu ausgebildet, den aus einer passiven Verlagerung des Kolbens resultierenden Fluidvolumenstrom zwischen den beiden Fluidkammern abzusperren, sobald der Fluidvolumenstrom einen Ansprechwert des Sperrventils erreicht oder überschreitet. Auf diese Weise ist bei aktiviertem Sperrventil ein weiterer Volumenaustausch zwischen den beiden Fluidkammern unterbunden, was naturgemäß zu einer Hemmung der linearen Beweglichkeit des Kolbens und damit einem quasi Versteifen des Fangzylinders führt. Versteifen meint hierbei, dass dieser sich bei aktiviertem Sperrventil nicht mehr - etwa wie eine Rohrbruchsicherung - längen lässt, was für eine Hubbewegung und die damit einhergehende Relativbewegung der Elemente eines Lasthebemittels allerdings notwendig ist. Im Ergebnis führt eine Aktivierung des Sperrventils folgerichtig dazu, dass der Fangzylinder in seinem bestimmungsgemäßen Einsatz die Hubbewegung eines Lasthebemittels insbesondere bei dessen Absturz wirksam verhindern kann.

Erfindungsgemäß wird vorgeschlagen, einen an sich notwendigen Fluidspeicher direkt innerhalb des Fangzylinders zu integrieren. Der Fluidspeicher dient vornehmlich der Kompensation eines beispielsweise über eine Leckage abnehmenden Fluidvolumens. Auch kann er als Energiespeicher und zur Dämpfung etwaiger Druckstöße dienen.

Die konkrete Umsetzung kann in besonders bevorzugter Weise derart erfolgen, dass der Fluidspeicher innerhalb eines einem ersten Endabschnitt des Gehäuses gegenüberliegenden zweiten Endabschnitts des Gehäuses ausgebildet ist.

Hierdurch ergeben sich überaus schlanke Abmessungen für den erfindungsgemäßen Fangzylinder, da dessen notwendige Peripherie auf nunmehr engstem Raum untergebracht ist und so das Handling wie auch die Integration des Fangzylinders in ein Lasthebemittel deutlich erleichtert ist.

In einer bevorzugten Weiterbildung des grundsätzlichen Erfindungsgedankens ist vorgesehen, dass das Gehäuse im Wesentlichen ein Zylinderrohr sowie einen Rohrkörper aufweisen kann. Dabei dient das Zylinderrohr der Führung des Kolbens, während der Fluidspeicher in vorteilhafter Weise innerhalb des Rohrkörpers ausgebildet sein kann. Hierzu kann der Rohrkörper ein dem zweiten Endabschnitt zugewandtes Ende des Zylinderrohres umgreifen, so dass dessen Volumen eine Ergänzung für das Volumen des Zylinderrohres darstellt. In besonders bevorzugter Weise kann der Fluidspeicher dabei einen innerhalb des Rohrkörpers angeordneten und in sowie entgegen einer Längsrichtung der Kolbenstange verlagerbaren Kammerboden besitzen, so dass das zur Verfügung stehende Volumen des Fluidspeichers durch eine Verlagerung des Kammerbodens veränderbar ist.

Um die hierfür notwendige Vorspannung des Fluidspeichers zu erreichen, kann der Kammerboden in vorteilhafter Weise über ein Gegendruckelement, insbesondere Federelement oder Druckfluid, belastet sein, welches zwischen dem Kammerboden und einem den Rohrkörper zu seinem freien Ende hin verschließenden Deckel hin erstreckt. Hierdurch ist der Kammerboden über das Gegendruckelement an dem Deckel des Rohrkörpers abgestützt.

Gemäß einer besonders bevorzugten Ausgestaltung des erfindungsgemäßen Fangzylinders kann dessen in und entgegen der Längsrichtung der Kolbenstange verlagerbarer Kammerboden mit einem Messmittel gekoppelt sein. Diese Kopplung kann in besonders vorteilhafter Weise derart erfolgen, dass ein in Summe abnehmendes Fluidvolumen innerhalb des Fangzylinders detektierbar ist. Dies wird dadurch ermöglich, dass der Fluidkreislauf ein an sich geschlossenes System darstellt. Sofern das Fluidvolumen innerhalb diesem abnimmt, muss der abhanden gekommene Volumenteil über den Fluidspeicher kompensiert werden, was wiederum mit einem Nachrücken seines Kammerbodens einhergeht. So kann das Messmittel beispielsweise so ausgestaltet sein, dass dieses die Verlagerung des Kammerbodens misst oder zumindest erkennt, und daraufhin ein entsprechendes Signal erzeugt. Besagtes Signal kann seinerseits dazu genutzt werden, eine entsprechende Meldung oder Warnung auszugeben bis hin zum Abschalten des Lasthebemittels, in welches der erfindungsgemäße Fangzylinder integriert ist.

In einer konsequenten Weiterentwicklung der möglichst kompakten Bauweise des erfindungsgemäßen Fangzylinders wird vorgeschlagen, dass der Fangzylinder einen Ventilblock aufweisen kann, der über eine Leitung mit der zweiten Fluidkammer fluidleitend verbunden ist. Das Sperrventil ist dabei in oder an dem Ventilblock angeordnet. Weiterhin ist in einem ersten Endabschnitt des Gehäuses ein Gehäusedurchgang angeordnet, welcher mit der ersten Fluidkammer fluidleitend verbunden ist. Ferner besitzt der Ventilblock eine Aufnahmeöffnung, in welcher der erste Endabschnitt des Gehäuses angeordnet ist.

Mit anderen Worten kann der Ventilblock ein Sackloch oder ein Durchgangsloch aufweisen, in welches hinein der erste Endabschnitt des Gehäuses eingesteckt ist. In vorteilhafter Weise kann es sich bei der Aufnahmeöffnung des Ventilblocks um ein Durchgangsloch handeln, so dass die Stirnseite des am ersten Endabschnitt gelegenen Endes des Gehäuses durch die Aufnahmeöffnung hindurch erreichbar ist.

Um nun die notwendige Verbindung zwischen den beiden Fluidkammern zu realisieren, sieht die Erfindung einen in dem Ventilblock angeordneten Ventilblockkanal vor, welcher mit der Leitung und dem Sperrventil in fluidleitender Verbindung steht. Dabei ist der erste Endabschnitt des Gehäuses derart innerhalb der Aufnahmeöffnung des Ventilblocks angeordnet, dass der Ventilblockkanal des Ventilblocks mit dem Gehäusedurchgang fluidleitend verbunden ist.

Der sich hieraus ergebende Vorteil liegt darin begründet, dass die notwendige Peripherie des Fangzylinders, wie dessen Sperrventil, nun möglichst nahe an dem Gehäuse angeordnet ist. Dank der sich hieraus ergebenden kompakten Abmessungen des Fangzylinders ist dieser insgesamt einfacher in ein Lasthebemittel integrierbar. Aufgrund der einzelnen sich zwischen der zweiten Fluidkammer und dem Ventilblock erstreckenden Leitung reduziert sich der gesamte Aufbau auf nur wenige Teile, was eine überaus praktikable Handhabung des Fangzylinders ermöglicht.

Aufbauend auf der zuvor erläuterten möglichen Ausführungsform des Fangzylinders sieht die Erfindung vor, dass eine dem ersten Endabschnitt des Gehäuses zugewandte Innenfläche der Aufnahmeöffnung des Ventilblocks eine Nut besitzen kann, innerhalb welcher der Ventilblockkanal angeordnet ist. Alternativ oder in Ergänzung hierzu kann eine der Innenfläche der Aufnahmeöffnung zugewandte Außenfläche des ersten Endabschnitts des Gehäuses eine Nut besitzen, innerhalb welcher der Gehäusedurchgang angeordnet ist. Aufgrund der Anordnung des Ventilblockkanals und/oder des Gehäusedurchgangs innerhalb der zugehörigen Nut stehen diese naturgemäß in einer fluidleitenden Verbindung. Auf diese Weise wird keine absolute Deckungsgleichheit bei der Montage des Ventilblocks auf dem Gehäuse benötigt, da ein möglicher Versatz zwischen Ventilblockkanal und Gehäusedurchgang in Richtung der Nut/-en weiterhin deren fluidleitende Verbindung über die Nut/-en ermöglicht.

In Kombination mit der Anordnung der Nut/-en sieht eine besonders bevorzugte Weiterbildung der Erfindung vor, dass die Anordnung des Ventilblocks auf dem Gehäuse rotierbar ausgebildet sein kann. Dies meint, dass das Gehäuse innerhalb der Aufnahmeöffnung des Ventilblocks um seine Längsrichtung herum relativ zum Ventilblock verdrehbar sein kann, woraus sich eine entsprechende Rotierbarkeit des Ventilblocks auf dem Gehäuse ergibt. In besonders vorteilhafter Weise kann/können die Nut/-en umlaufend um den ersten Endabschnitt des Gehäuses herum ausgebildet sein. Hieraus ergibt sich, dass der Gehäusedurchgang und der Ventilblocckanal unabhängig von der jeweiligen Ausrichtung des Ventilblocks gegenüber dem Gehäuse über die Nut/-en grundsätzlich fluidleitend miteinander verbunden sind. Dank dieser Ausgestaltung ist es möglich, die Ausrichtung des Ventilblocks beispielsweise erst vor Ort an die jeweilige Einbausituation anzupassen, so dass der Fangzylinder auch in mitunter nur beengt zur Verfügung stehenden Bauräumen eines Lasthubmittels integrierbar ist.

In einer Weiterführung des erfindungsgemäßen Fangzylinders kann ein Schaltelement in oder an dem Ventilblock angeordnet sein. Das Schaltelement ist in vorteilhafter Weise dazu ausgebildet, einen aus dem Absperren des Sperrventils her resultierenden Druckanstieg innerhalb des Fangzylinders zu detektieren. Hierdurch ist die in bevorzugter Weise selbsttätige Aktivierung des Sperrventils aber auch eine sonstige, beispielsweise durch einen Defekt mit einem Druckanstieg einhergehende Situation erkennbar, so dass hierauf in geeigneter Weise reagiert werden kann. So kann das Schaltelement dazu ausgebildet sein, bei Druckerhöhung ein entsprechendes Signal hierüber zu erzeugen, auf dessen Basis beispielsweise der Antrieb des Lasthebemittels abstellbar ist und/oder eine gezielte Meldung oder Warnung ausgegeben werden kann.

Bei der zuvor erläuterten wenigstens zweiteiligen Ausgestaltung des Gehäuses aus Zylinderrohr und Rohrkörper wird es als besonders vorteilhaft angesehen, wenn diese lösbar miteinander verbunden sind. Auch kann der Ventilblock in besonders bevorzugter Weise mit dem Zylinderrohr lösbar verbunden sein. Aufgrund der - im Gegensatz zu stoffschlüssigen Verbindungen wie etwa Schweißen - lösbaren Verbindung/-en lassen sich etwaige Wartungs- und/oder Austauscharbeiten von Komponenten des Fangzylinders in einfacher Weise, insbesondere im zuständigen Fachbetrieb, durchführen.

Vorteilhafterweise kann das Sperrventil so in oder an dem Ventilblock angeordnet sein, dass dieses im eingebauten Zustand hinsichtlich seines das Absperren des Sperrventils auslösenden Ansprechwertes einstellbar ist. Mit anderen Worten sieht die Erfindung eine Einbaulage und/oder Ausgestaltung für das Sperrventil vor, die dessen Einstellbarkeit quasi im Betrieb, also ohne die Notwendigkeit einer zumindest teilweisen Zerlegung des Fangzylinders bzw. Ventilblocks, ermöglichen/ermöglicht.

Gemäß einer bevorzugten Weiterbildung des Fangzylinders kann dieser ein aktiv ansteuerbares Schließventil umfassen. Das Schließventil ist dazu ausgebildet, den aus der passiven Verlagerung des Kolbens resultierenden Fluidfluss zwischen den Fluidkammern unabhängig von der Überschreitung des Ansprechwertes für den Fluidvolumenstrom abzusperren. Dies ermöglicht die Aktivierung des Fangzylinders und insbesondere dessen versteifende Wirkung innerhalb eines Lasthebemittels auch unabhängig von dem Ansprechen des Sperrventils. So kann das Schließventil beispielsweise bei Wartungsarbeiten unterhalb des angehobenen Oberrahmens eines Lasthebemittels gezielt aktiviert werden, so dass eine Absturzsicherung für darunter befindliches Personal gegeben ist.

In besonders bevorzugter Weise kann das Schließventil ebenfalls in oder an dem Ventilblock angeordnet sein, so dass die möglichst kompakte Bauweise des Fangzylinders konsequent durchgeführt wird.

Eine weitere besonders vorteilhafte Ausgestaltung des erfindungsgemäßen Fangzylinders sieht die mögliche Anordnung eines aktiv ansteuerbaren Ablassventils vor. Das Ablassventil ist dazu ausgebildet, den im aktivierten Zustand des Sperrventils abgesperrten Fluidfluss zwischen den Fluidkammern an dem Sperrventil vorbei zu ermöglichen. Dies meint, dass der an sich im aktivierten Zustand des Fangzylinders gehemmte Fluidfluss auch bei geschlossenem Absperrventil kontrolliert stattfinden kann, um beispielsweise den in großer Höhe abgefangenen Oberrahmen eines Lasthebemittels gezielt abzusenken. Hierzu kann das Ablassventil in einem das Sperrventil umgehenden Bypass angeordnet sein, um den hierfür notwendigen Fluidfluss an dem abgesperrten Sperrventil vorbei zu ermöglichen.

In besonders bevorzugter Weise kann das Ablassventil ebenfalls in oder an dem Ventilblock angeordnet sein, so dass die möglichst kompakte Bauweise des Fangzylinders konsequent durchgeführt wird.

Die nunmehr vorgestellte Erfindung zeigt eine Sicherheitseinrichtung in Form eines Fangzylinders auf, welcher aufgrund seiner kompakten Abmessungen und des strukturierten Aufbaus insgesamt einfacher in ein Lasthebemittel integrierbar ist. Insbesondere die Kombination aus einem innerhalb des Gehäuses integrierten Fluidspeicher und dem rotierbar an dem Gehäuse angeordneten Ventilblock weist ein Maximum an Kompaktheit und Anpassbarkeit auf, so dass auch eine individuelle Veränderung des Fangzylinders durch Verschwenken des Ventilblocks möglich ist. Auf diese Weise ist der erfindungsgemäße Fangzylinder auch in beengten Bauräumen einsetzbar, ohne die ansonsten mitunter gegebene Notwendigkeit der Anordnung seiner Peripherie (z.B. Fluidspeicher) in anderen Bereichen des zur Verfügung stehenden Bauraumes.

Die Erfindung ist ferner auf ein Lasthebemittel gerichtet, bei dem es sich in besonders bevorzugter Weise um einen Scherenhubtisch handeln kann. Das Lasthebemittel umfasst wenigstens zwei Elemente, die sich während einer Hubbewegung des Lasthebemittels relativ zueinander verlagern. Zwischen diesen Elementen ist ein wie zuvor beschriebener erfindungsgemäßer Fangzylinder angeordnet. Hierzu ist dessen Gehäuse mit einem der Elemente gekoppelt, während seine Kolbenstange mit dem anderen Element gekoppelt ist.

Die Kopplung des Fangzylinders mit den Elementen kann jeweils direkt oder indirekt erfolgen. Dies meint, dass der Fangzylinder über wenigstens eines seiner beiden Enden entweder direkt mit einem der Elemente oder aber unter Zwischenschaltung wenigstens eines weiteren Bauteils mit einem der Elemente gekoppelt sein kann.

Weiterhin kann die Kopplung zwischen Fangzylinder und den beiden Elementen bevorzugt lösbar ausgestaltet sein, so dass sich eine einfache Entnahme des Fangzylinders ergibt. Dies kann insbesondere dann notwendig sein, wenn der Fangzylinder bereits einen Absturz des Lasthebemittels verhindert hat und daher aus Sicherheitsgründen auszutauschen ist oder zu seiner Überprüfung oder Instandsetzung entfernt werden muss.

Die sich aus dem erfindungsgemäßen Lasthebemittel ergebenden Vorteile wurden bereits zuvor im Zusammenhang mit der Vorstellung des erfindungsgemäßen Fangzylinders näher erläutert, so dass an dieser Stelle auf die vorherigen Ausführungen hierzu verwiesen wird.

### KURZBESCHREIBUNG DER ZEICHNUNGSABBILDUNG

Die Erfindung wird nachfolgend anhand der Figuren 1 - 6 näher erläutert. Es zeigen:
- Fig. 1: einen erfindungsgemäßen Fangzylinder in einer perspektivischen Ansicht,
- Fig. 2: den Fangzylinder aus Fig. 1 in teilweise geschnittener Ansicht in ansonsten derselben Darstellungsweise,
- Fig. 3: eine alternative Ausgestaltung des Fangzylinders aus den Fig. 1 und 2 in teilweiser geschnittener Ansicht und gleicher Darstellungsweise,
- Fig. 4: den Fangzylinder aus den Figuren 1 und 2 in einer Seitenansicht,
- Fig. 5: den Fangzylinder aus den Figuren 1 und 2 sowie 4 in einer Aufsicht,
- Fig. 6: einen Längsschnitt durch den Fangzylinder aus den Fig. 1 bis 5,
- Fig. 7: ein Detail des Fangzylinders aus den Fig. 1 bis 6 in einer ersten Ansicht,
- Fig. 8: das Detail aus Fig. 7 in einer veränderten Ansicht,
- Fig. 9: das Detail aus den Fig. 7 und 8 in einer weiteren Ansicht,
- Fig. 10: einen Hydraulikplan zum Betrieb des erfindungsgemäßen Fangzylinders aus den Fig. 1 bis 9 sowie
- Fig. 11: eine alternative Ausgestaltung des Hydraulikplans aus Fig. 10.

### BESTER WEG ZUR AUSFÜHRUNG DER ERFINDUNG

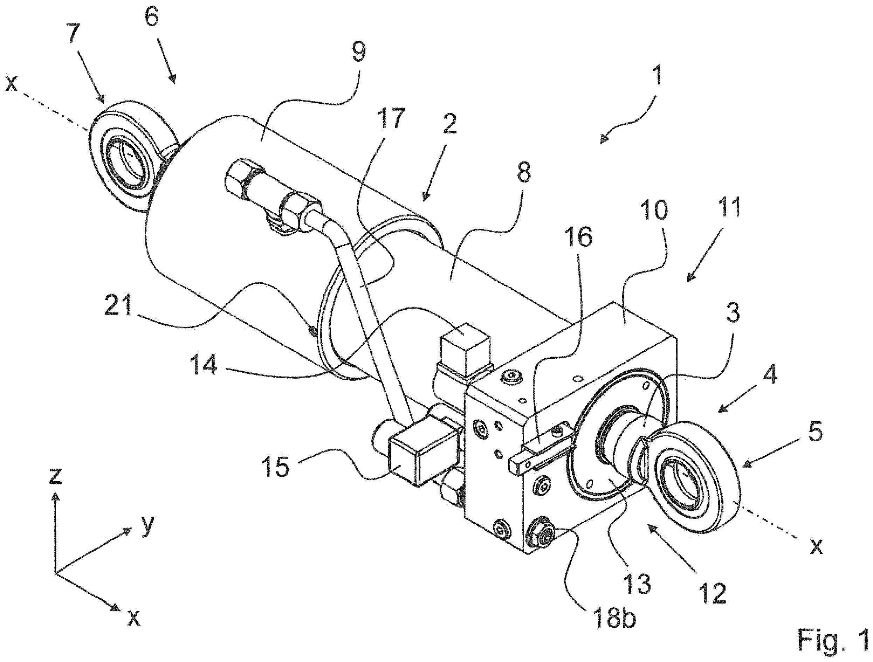

Fig. 1 zeigt einen erfindungsgemäßen Fangzylinder 1 in einer perspektivischen Seitenansicht. In seiner Ausgestaltung dient er als Sicherheitseinrichtung innerhalb eines nicht näher dargestellten Lasthebemittels, wie etwa einem Scherenhubtisch. Derartige Lasthebemittel weisen gewöhnlich beispielsweise einen Scherenantrieb mit wenigstens einem Scherengestänge auf, welches mindestens zwei relativ zueinander verlagerbare, insbesondere verschwenkbare Elemente besitzt.

Der Fangzylinder 1 umfasst ein sich in eine Längsrichtung x erstreckendes Gehäuse 2, in welchem eine in und entgegen der Längsrichtung x verlagerbare Kolbenstange 3 angeordnet ist. An einem freien Ende 4 der Kolbenstange 3 ist ein zur Kopplung mit einem der Elemente des nicht ersichtlichen Scherenantriebes vorgesehenes Lagerelement 5 angeordnet oder ausgebildet. Ein dem Lagerelement 5 gegenüberliegendes freies Ende 6 des Fangzylinders 1 weist ein weiteres Lagerelement 7 auf, so dass der Fangzylinder 1 zwischen den relativbeweglichen Elementen des Scherenantriebs angeordnet werden kann und mit diesen kraftübertragend koppelbar ist.

Das Gehäuse 2 weist vorliegend zwei Bauteile auf, bei denen es sich um ein Zylinderrohr 8 sowie einen Rohrkörper 9 handelt. Erkennbar ist im Bereich der aus dem Zylinderrohr 8 austretenden Kolbenstange 3 ein Ventilblock 10 angeordnet, welcher einen ersten Endabschnitt 11 des Gehäuses 2 bzw. dessen Zylinderrohres 8 umgreift. Hierzu weist der sich in eine Querrichtung y sowie eine Hochrichtung z jeweils senkrecht zur Längsrichtung x erstreckende Ventilblock 10 eine Aufnahmeöffnung 12 auf, innerhalb welcher der erste Endabschnitt 11 angeordnet ist. Die Aufnahmeöffnung 12 ist als Durchgangsloch ausgestaltet, so dass ein das Gehäuse 2 bzw. dessen Zylinderrohr 8 stirnseitig verschließender Deckel 13 durch die Aufnahmeöffnung 12 hindurch erkennbar ist.

Der Ventilblock 10 selbst weist mehrere an diesem sichtbar angeordnete Elemente auf, bei denen es sich um ein Sperrventil 14 und ein Schaltelement 15 in Form eines Druckschalters sowie ein manuell betätigbares Ablassventil 16 handelt, von dem vorliegend im Wesentlichen nur dessen außenliegendes Betätigungselement erkennbar ist. Zwischen dem Ventilblock 10 und dem Rohrkörper 9 des Gehäuses 2 erstreckt sich eine außenliegende Leitung 17, welche eine entsprechend fluidleitende Verbindung herstellt.

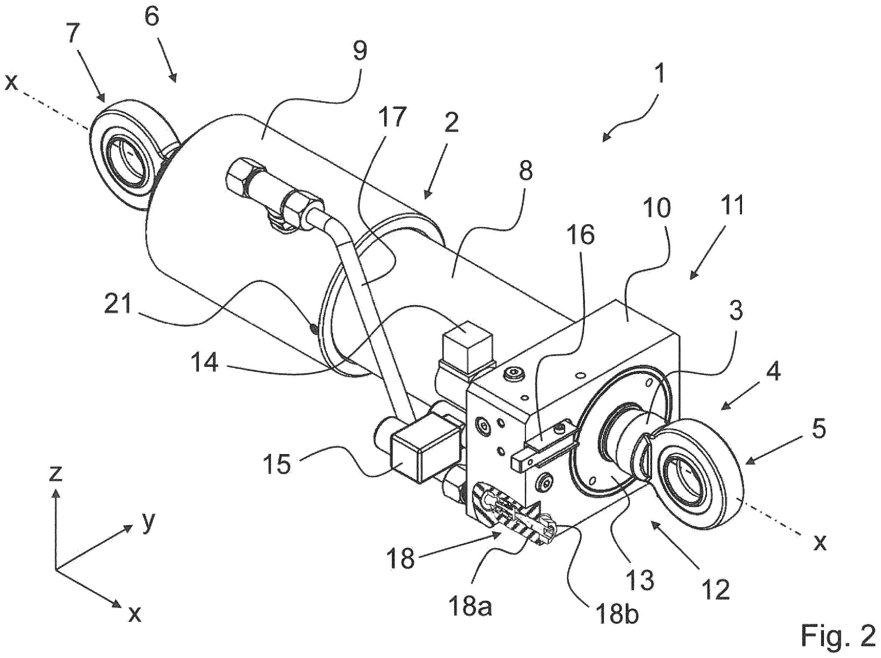

Fig. 2 zeigt nochmals den Fangzylinder 1 aus Fig. 1 in einer teilweise geschnittenen Darstellung. Hierdurch wird der Blick in einen Teil des Ventilblocks 10 unterhalb des Ablassventils 16 frei, in welchem ein Sperrventil 18 angeordnet ist. Das Sperrventil 18 ist so ausgebildet, dass dessen Ansprechwert von außerhalb des Ventilblocks 10 einstellbar ist. Hierzu weist das Sperrventil 18 einen Einstellbolzen 18a auf, der über sein Außengewinde mit einem Innengewinde des Ventilblocks 10 in Eingriff steht. Der Einstellbolzen 18a weist eine an seinem freien Endabschnitt angeordnete Koppelstelle auf, beispielsweise für ein hier nicht näher gezeigtes Werkzeug in Form eines Inbusschlüssels. Dessen so gegebene und zur linearen Verlagerung dienende Verdrehbarkeit um seine Längsachse herum ist durch eine außen angeordnete Kontermutter 18b sicherbar, sobald dessen gewünschte Tiefenlage eingestellt ist.

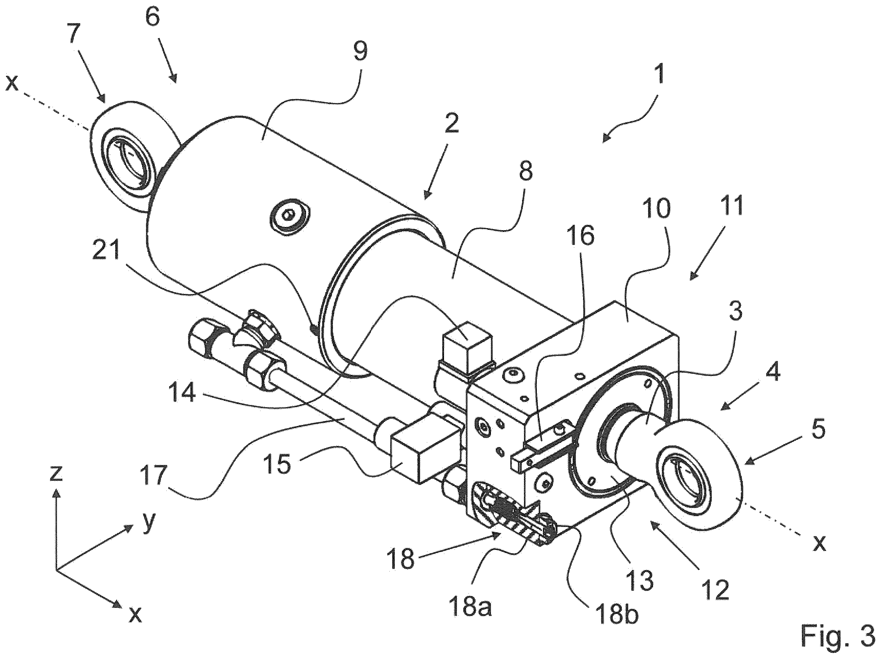

Fig. 3 veranschaulicht erneut den Fangzylinder 1 aus Fig. 1 und 2, allerdings in einer alternativen Ausgestaltung hinsichtlich des Verlaufs der außenliegenden Leitung 17. Wie zu erkennen, ist diese hier nicht quasi S-förmig abgebogen, sondern erstreckt sich parallel zur Längsrichtung x des Gehäuses 2. Die nachfolgenden Erläuterungen zu den weiteren Figuren gelten selbstverständlich auch für die hier gezeigte Variante des Fangzylinders 1.

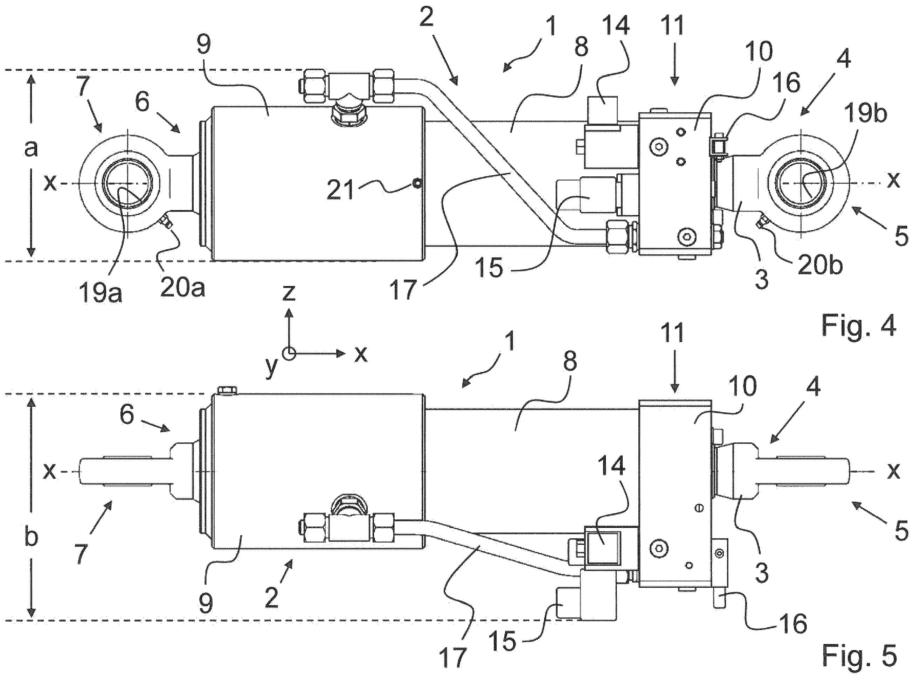

Fig. 4 zeigt den Fangzylinder 1 aus den Figuren 1 und 2 in einer Seitenansicht. In dieser Darstellung ist erkennbar, dass die beiden Lagerelement 5, 7 als Lageraugen bzw. Lagerringe ausgebildet sind, in denen jeweils ein Innenring 18, 20 drehbar gelagert ist. Zur erstmaligen und/oder intervallmäßigen Schmierung der drehbaren Innenringe 19a, 19b weisen die beiden Lagerelement 5, 7 ferner jeweils einen Schmiernippel 20a, 20b auf.

Fig. 5 ist der Fangzylinder 1 aus den Fig. 1 und 2 sowie 4 nochmals in einer Aufsicht zu entnehmen. Die Seitenansicht aus Fig. 2 und die hier gezeigte Aufsicht verdeutlichen die kompakte Bauform des Fangzylinders 1, insbesondere in dessen maximaler Höhe a und Breite b.

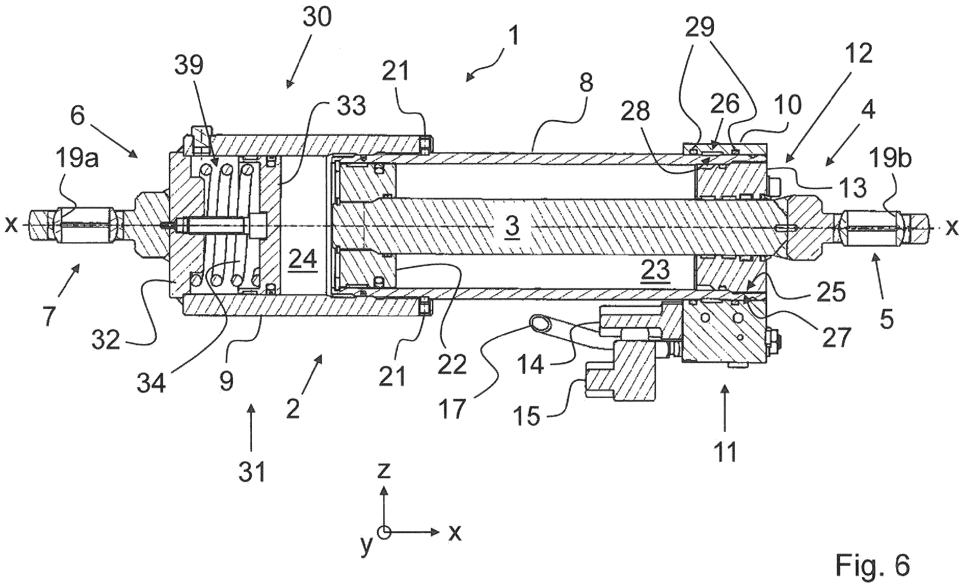

Fig. 6 stellt einen Schnitt parallel zur Längsrichtung x durch den Fangzylinder 1 der Fig. 1 bis 5 hindurch dar. Hieraus ist ersichtlich, dass das Zylinderrohr 8 an seinem dem freien Ende 6 des Fangzylinders 1 zugewandten Ende abschnittsweise innerhalb des Rohrkörpers 9 angeordnet, insofern also von diesem umgriffen ist. Der Verbindung von Zylinderrohr 8 und Rohrkörper 9 dienen lösbare Verbindungsmittel 21, die vorliegend in Form von als Madenschrauben bekannten Stiftschrauben senkrecht zur Längsrichtung x durch die Wandung des Rohrkörpers 9 hindurch in Vertiefungen des Zylinderrohres 8 greifen.

Erkennbar ist ein innerhalb des Gehäuses 2 bzw. seines Zylinderrohres 8 angeordneter Kolben 22, welcher darin in und entgegen der Längsrichtung x linear geführt ist. Die Kolbenstange 3 ist derart mit dem Kolben 22 verbunden, dass diese nur zusammen in und entgegen der Längsrichtung x verlagerbar sind. Der Kolben 22 unterteilt das Innere des Gehäuses 2 in zwei Teile, wodurch eine dem ersten Endabschnitt 11 und dem Deckel 13 zugewandte erste Fluidkammer 23 und eine dem Rohrkörper 9 zugewandte zweite Fluidkammer 24 ausgebildet sind. Beide Fluidkammern 23, 24 sind durch den Kolben 22 voneinander abgegrenzt.

Beide Fluidkammern 23, 24 sind über die Leitung 17 und den Ventilblock 10 fluidleitend miteinander verbunden, so dass bei einer passiven Verlagerung des Kolbens das Fluidvolumen zwischen den Fluidkammern 23, 24 verlagerbar ist. Hierzu besitzt der Rohrkörper 9 eine hier nicht erkennbare Öffnung, über welche die Leitung 17 (hier geschnitten dargestellt) mit der zweiten Fluidkammer 24 fluidleitend verbunden ist. Weiterhin weist das Zylinderrohr 8 einen hier ebenfalls nicht erkennbaren, innerhalb des ersten Endabschnitts 11 angeordneten Gehäusedurchgang auf, welcher fluidleitend mit der ersten Fluidkammer 23 verbunden ist. Um die beiden Fluidkammern 23, 24 nun fluidleitend miteinander zu verbinden, weist der Ventilblock 10 einen hier ebenfalls nicht erkennbaren Ventilblockkanal auf, welcher über den Ventilblock 10 fluidleitend mit der Leitung 17 verbunden ist.

Um den Gehäusedurchgang mit dem Ventilblockkanal fluidleitend zu verbinden, ist an einer dem ersten Endabschnitt 11 des Gehäuses 2 zugewandten Innenfläche 25 der Aufnahmeöffnung 12 des Ventilblocks 10 eine Nut 26 angeordnet. Weiterhin ist an einer der Innenfläche 25 der Aufnahmeöffnung 12 zugewandten Außenfläche 27 des ersten Endabschnitts 11 eine weitere Nut 28 angeordnet, welche mit der Nut 26 des Ventilblocks 10 in einer gemeinsamen Ebene liegt. Sowohl der hier nicht erkennbare Ventilblockkanal als auch der ebenfalls nicht ersichtliche Gehäusedurchgang sind dabei innerhalb der jeweils zugehörigen Nut 26, 28 angeordnet, so dass hierüber eine fluidleitende Verbindung geschaffen ist.

Auf diese Weise sind die beiden Fluidkammern 23, 24 fluidleitend miteinander verbunden, wobei innerhalb dieser Verbindung das Sperrventil 14 derart angeordnet ist, dass ein aus einer passiven Verlagerung des Kolbens 22 her resultierender Fluidvolumenstrom zwischen den beiden Fluidkammern 23, 24 bei Überschreitung eines Ansprechwertes des Sperrventils 14 absperrbar ist.

Aufgrund dieser Ausgestaltung ist ferner der Ventilblock 10 so ausgebildet und angeordnet, dass dieser auf dem ersten Endabschnitt 11 des Gehäuses 2 bzw. des Zylinderrohres 8 rotierbar ist. Bei einer bevorzugt umlaufenden Ausgestaltung der Nuten 26, 28 kann der Ventilblock 10 folglich jede Rotationsstellung um die Längsrichtung x herum einnehmen, ohne die fluidleitende Verbindung zwischen den beiden Fluidkammern 23, 24 zu unterbrechen. Parallel zu den Nuten 26, 28 angeordnete Dichtungsmittel 29 in Form von O-Ringen sorgen dabei für die notwendige Abdichtung.

Innerhalb des Fangzylinder 1 ist weiterhin ein Fluidspeicher 30 ausgebildet, welcher in einem dem ersten Endabschnitt 11 gegenüberliegenden zweiten Endabschnitt 31 des Gehäuses 2 bzw. des Rohrkörpers 9 ausgebildet ist. Erkennbar weist der Rohrkörper 9 einen diesen zum freien Ende 6 hin verschließenden Deckel 32 auf. Innerhalb des Rohrkörpers 9 ist ein sich parallel zu diesem Deckel 32 erstreckender und in sowie entgegen der Längsrichtung x verlagerbarer Kammerboden 33 angeordnet. Zwischen Deckel 32 und Kammerboden 33 ist ein im gezeigten Beispiel als Federelement ausgebildetes Gegendruckelement 34 integriert, so dass der Kammerboden 33 gegen den Deckel 32 abgestützt und mit einer Vorspannung beaufschlagbar ist. Hierdurch kann ein veränderbares Fluidvolumen bereitgestellt werden, welches bei Bedarf durch eine Verlagerung des Kammerbodens 33 in den Fluidkreislauf quasi nachrücken kann.

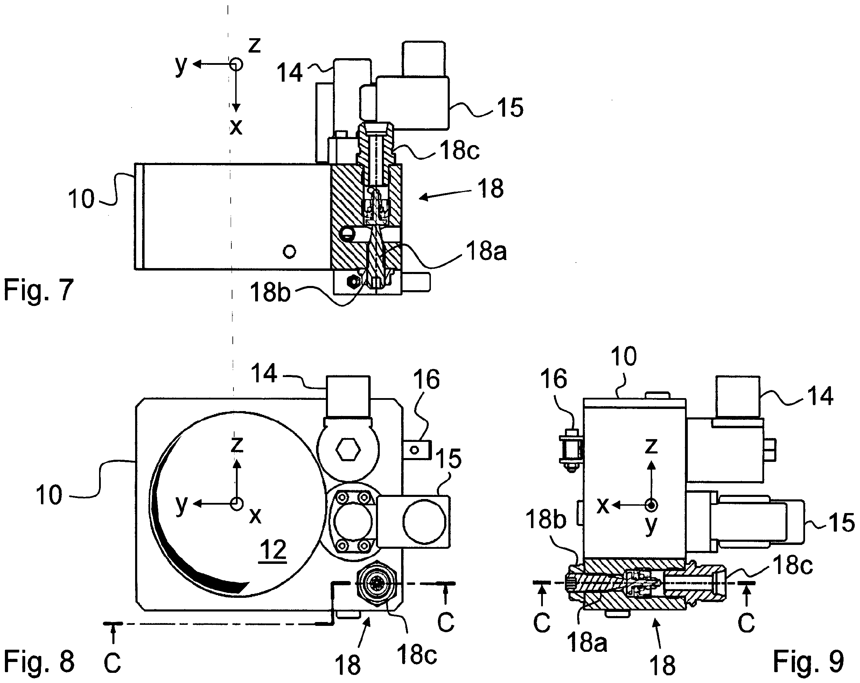

Fig. 7 stellt den Ventilblock 10 des Fangzylinders 1 der Fig. 1 bis 6 mitsamt seiner Anbauten in Alleinstellung dar. Der Blick fällt dabei auf die Unterseite des Ventilblocks 10 in Hochrichtung z. Erkennbar ist der Bereich des Ventilblocks 10 um das Sperrventil 18 herum teilweise geschnitten gezeigt, wobei sich der Verlauf einer hierfür angelegten Schnittspur C-C durch den Ventilblock 10 hindurch aus Fig. 8 ergibt. Die Abbildung zeigt ferner eine Verschraubung 18c, welche in einer der Kontermutter 18b gegenüberliegenden Seite des Ventilblocks 10 eingeschraubt ist. Bei der Verschraubung 18c handelt es sich um eine Anschlussverschraubung, die der fluidleitenden Verbindung des Sperrventils 18 mit der hier nicht gezeigten außenliegenden Leitung 17 dient.

Fig. 8 ist der Ventilblock 10 aus Fig. 7 in einer veränderten Ansicht zu entnehmen. Die Blickrichtung weist hierbei in Längsrichtung x auf jene Seite des Ventilblocks 10, von der aus das Zylinderrohr 8 in den Ventilblock 8 eingeführt ist. Dabei geht der Blick durch die zur Aufnahme des Zylinderrohres 8 notwendige kreisrunde Aufnahmeöffnung 12 des Ventilblocks 10 hindurch. Dies ist auch jene Seite des Ventilblocks 10, in bzw. an welcher das Schließventil 14 und das Schaltelement 15 angeordnet sind.

Fig. 9 verdeutlich nochmals die Lage des Sperrventils 18 innerhalb des Ventilblocks 10, wobei die Blickrichtung hier auf eine Randseite des Ventilblocks 10 entgegen der Querrichtung y verläuft.

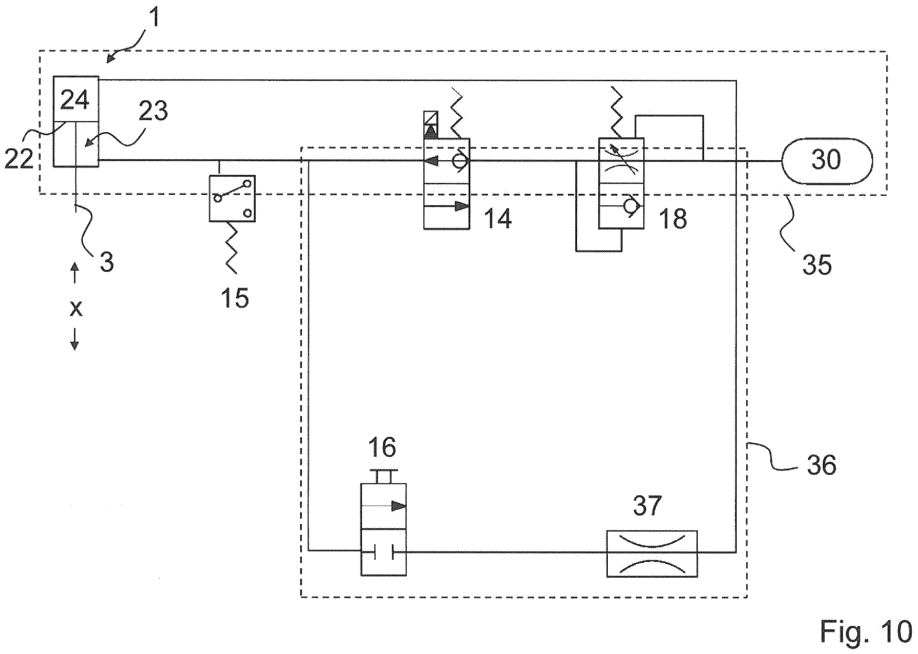

Fig. 10 zeigt einen Hydraulikplan zum Betrieb des mit Bezug auf die Darstellung in Fig. 5 links oben gezeigten Fangzylinders 1 der Fig. 1 bis 4. Erkennbar ist der im Betrieb übliche Fluidkreislauf 35, welcher die Verbindung zwischen den beiden Fluidkammern 23, 24 ermöglicht. Durch diesen kann das Fluidvolumen in Abhängigkeit der Stellung der Kolbenstange 3 bzw. des Kolbens 22 zwischen den beiden Fluidkammern 23, 24 bevorzugt widerstandsfrei verlagert werden. Etwaige Verluste des Fluidvolumens, Schwankungen durch Temperaturveränderungen oder mechanische Stöße sind von dem innerhalb des Fluidkreislaufs 35 angeordneten Fluidspeicher 30 kompensierbar.

Sobald der aus einer passiven Verlagerung der Kolbenstange 3 bzw. des Kolbens 22 resultierende Fluidvolumenstrom zwischen den beiden Fluidkammern 23, 24 einen zuvor von außen an dem Sperrventil 18 einstellbaren Ansprechwert erreicht oder überschreitet, wird der Fluidkreislauf 35 durch das Schließen des Sperrventils 18 abgesperrt. Im Ergebnis ist der Fluidvolumenstrom zwischen den beiden Fluidkammern 23, 24 gehemmt, so dass keinerlei Bewegung der Kolbenstange 3 bzw. des Kolbens 22 mehr möglich ist.

Aufgrund der im eingebauten Zustand in einem Lasthebemittel anstehenden Belastung steigt der Druck innerhalb des Fluidkreislaufs 35 an, wodurch ein Signal durch das Schaltelement 15 ausgelöst wird. Um den über das Sperrventil 18 quasi versteiften Fangzylinder 1 wieder zu lösen, kann das innerhalb eines Bypasses 36 zu dem Fluidkreislauf 35 angeordnete Ablassventil 16 betätigt werden, so dass der Fluidvolumenstrom zwischen den beiden Fluidkammern 23, 24 über den Bypass 36 ermöglicht wird.

Einen weiteren Bestandteil des Fluidkreislaufs 35 bildet das Schließventil 14, in der vorliegenden Ausführung als 2/2-Wegesitzventil. Innerhalb des Bypasses 36 ist ferner eine Blende 37 integriert, um den maximal möglichen Fluidvolumenstrom durch den Bypass 36 hindurch zu reduzieren.

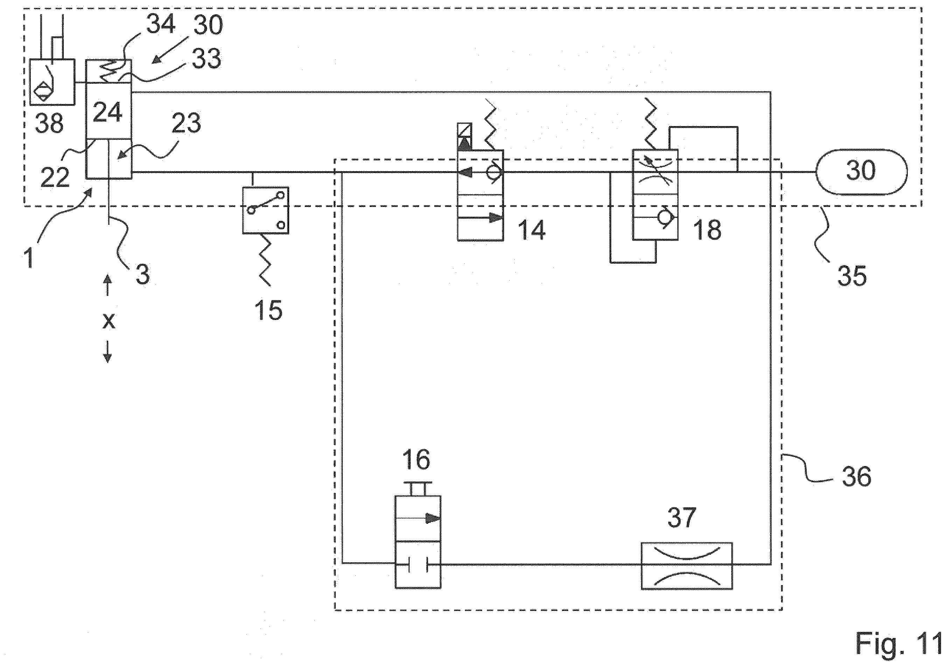

Fig. 11 zeigt eine alternative Ausgestaltung des Hydraulikplanes aus Fig. 10. Hierin sind zusätzlich die Bestandteile Kammerboden 33 und Federelement 34 des Fluidspeichers 30 schematisch dargestellt. Erkennbar ist der Kammerboden 33 darin mit einem Messmittel 38 gekoppelt. Bei dem Messmittel 38 kann es sich beispielsweise um einen induktiven oder optischen Sensor handeln. Dieser kann beispielsweise als Positionserkennungssystem ausgebildet sein. Das Messmittel 38 ist derart mit dem Kammerboden 33 verbunden oder gekoppelt, dass dessen lineare Verlagerung in und entgegen der Längsrichtung x detektierbar ist.

Auf dieser Basis kann das Messmittel 38 ein entsprechendes Signal erzeugen, was Auskunft über die Tatsache der Verlagerung des über das Federelement 34 federbelasteten Kammerbodens 33 und/oder die Weite seiner Verlagerung gibt. Aus dem Signal kann auf eine mögliche Leckage des Fangzylinders 1 geschlossen werden, da das übliche Fluidvolumen offensichtlich abgenommen hat und dessen fehlender Anteil durch den Fluidspeicher kompensiert werden muss. In diesem Fall rückt der Kammerboden 33 in Längsrichtung x zur zweiten Fluidkammer 24 hin nach, so dass der im System enthaltene Fluiddruck aufrechterhalten bleibt.

Die über das Federelement 34 auf den Kammerboden 33 wirkende Kraft kann bei Bedarf erhöht werden, indem der Fluidspeicher 30 mit einem Fluid befüllt wird. Das Fluid kann dabei in die durch den Rohrkörper 9 sowie dessen Deckel 32 und den Kammerboden 33 begrenzte Kammer 39 (siehe Fig. 6) eingebracht und mit Druck beaufschlagt werden. Bei dem verwendeten Fluid kann es sich um ein komprimierbares Fluid handeln, beispielsweise ein Gas wie Stickstoff.

## Patentansprüche

1. Fangzylinder zur Anordnung zwischen zwei relativ zueinander verlagerbaren Elementen eines Lasthebemittels, insbesondere Scherenhubtisches, umfassend ein mit einem der Elemente koppelbares Gehäuse (2) sowie eine mit dem anderen Element koppelbare Kolbenstange (3), welche mit einem zur Ausbildung einer ersten Fluidkammer (23) und einer zweiten Fluidkammer (24) innerhalb des Gehäuses (2) linear beweglich geführten Kolben (22) verbunden ist, wobei ein in einer Verbindung zwischen den beiden Fluidkammern (23, 24) angeordnetes Sperrventil (18) dazu ausgebildet ist, den aus einer passiven Verlagerung des Kolbens (22) resultierenden Fluidvolumenstrom zwischen den Fluidkammern (23, 24) bei Überschreitung eines Ansprechwertes abzusperren,
**gekennzeichnet durch**
einen Fluidspeicher (30), wobei das Gehäuse (2) einen ersten Endabschnitt (11) und einen dem ersten Endabschnitt (11) gegenüberliegenden zweiten Endabschnitt (31) besitzt, in welchem der Fluidspeicher (30) ausgebildet ist.

2. Fangzylinder nach Anspruch 1,
**dadurch gekennzeichnet,**
**dass** das Gehäuse (2) ein den Kolben (22) führendes Zylinderrohr (8) sowie einen Rohrkörper (9) aufweist, welcher ein dem zweiten Endabschnitt (31) zugewandtes Ende des Zylinderrohres (8) umgreift, wobei der Fluidspeicher (30) einen innerhalb des Rohrkörpers (9) angeordneten und in sowie entgegen einer Längsrichtung (x) der Kolbenstange (3) verlagerbaren Kammerboden (33) besitzt, der über ein, insbesondere als Federelement ausgebildetes, Gegendruckelement (34) an einem den Rohrkörper (9) zu seinem freien Ende (6) hin verschließenden Deckel (32) abgestützt ist.

3. Fangzylinder nach Anspruch 2,
**dadurch gekennzeichnet,**
**dass** der Kammerboden (33) mit einem Messmittel (38) gekoppelt ist derart, dass ein in Summe abnehmendes Fluidvolumen innerhalb des Fangzylinders (1) detektierbar ist, insbesondere ein Signal hierüber erzeugbar ist.

4. Fangzylinder nach einem der Ansprüche 1 bis 3,
**gekennzeichnet durch**
einen über eine Leitung (17) mit der zweiten Fluidkammer (24) verbundenen und das Sperrventil (18) aufweisenden Ventilblock (10), sowie einen in dem ersten Endabschnitt (11) des Gehäuses (2) angeordneten und mit der ersten Fluidkammer (23) verbundenen Gehäusedurchgang, wobei der Ventilblock (10) eine Aufnahmeöffnung (12) besitzt, in welcher der erste Endabschnitt (11) des Gehäuses (2) derart angeordnet ist, dass ein in dem Ventilblock (10) angeordneter Ventilblockkanal mit dem Gehäusedurchgang fluidleitend verbunden ist.

5. Fangzylinder nach Anspruch 4,
**dadurch gekennzeichnet,**
**dass** eine dem ersten Endabschnitt (11) des Gehäuses (2) zugewandte Innenfläche (25) der Aufnahmeöffnung (12) des Ventilblocks (10) und/oder eine der Innenfläche (25) der Aufnahmeöffnung (12) zugewandte Außenfläche (27) des ersten Endabschnitts (11) eine Nut (26, 28) besitzen/besitzt, wobei der Ventilblockkanal und/oder der Gehäusedurchgang innerhalb der Nut/-en (26, 28) angeordnet sind/ist.

6. Fangzylinder nach Anspruch 5,
**gekennzeichnet durch**
eine rotierbar ausgebildete Anordnung des Ventilblocks (10) auf dem Gehäuse (2), wobei die Nut/-en (26, 28) umlaufend um den ersten Endabschnitt (11) des Gehäuses (2) herum ausgebildet ist/sind, so dass der Gehäusedurchgang und der Ventilblockkanal unabhängig von der Ausrichtung des Ventilblocks (10) gegenüber dem Gehäuse (2) über die Nut/-en (26, 28) fluidleitend miteinander verbunden sind.

7. Fangzylinder nach einem der Ansprüche 4 bis 6,
**gekennzeichnet durch**
einen in oder an dem Ventilblock (10) angeordnetes Schaltelement (15), wobei das Schaltelement (15) dazu ausgebildet ist, einen aus dem Absperren des Sperrventils (18) her resultierenden Druckanstieg zu detektieren, insbesondere ein Signal hierüber zu erzeugen.

8. Fangzylinder nach einem der Ansprüche 4 bis 7,
**dadurch gekennzeichnet,**
**dass** der Rohrkörper (9) und/oder der Ventilblock (10) lösbar mit dem Zylinderrohr (8) verbunden sind/ist.

9. Fangzylinder nach einem der Ansprüche 4 bis 8,
**gekennzeichnet durch**
eine Anordnung des Sperrventils (18) in oder an dem Ventilblock (10) derart, dass dieses im eingebauten Zustand hinsichtlich seines das Absperren des Sperrventils (18) auslösenden Ansprechwertes einstellbar ist.

10. Fangzylinder nach einem der Ansprüche 1 bis 9,
**gekennzeichnet durch**
ein aktiv ansteuerbares Schließventil (14), welches in oder an dem Ventilblock (10) angeordnet ist, wobei das Schließventil (14) dazu ausgebildet ist, den aus der passiven Verlagerung des Kolbens (22) resultierenden Fluidfluss zwischen den Fluidkammern (23, 24) unabhängig von der Überschreitung des Ansprechwertes für den Fluidvolumenstrom abzusperren.

11. Fangzylinder nach einem der Ansprüche 4 bis 10,
**gekennzeichnet durch**
ein aktiv ansteuerbares Ablassventil (16), welches in oder an dem Ventilblock (10) angeordnet ist, wobei das Ablassventil (16) dazu ausgebildet ist, den im aktivierten Zustand des Sperrventils (18) abgesperrten Fluidfluss zwischen den Fluidkammern (23, 24) an dem Sperrventil (14) vorbei zu ermöglichen.

12. Lasthebemittel, insbesondere Scherenhubtisch, umfassend wenigstens zwei während einer Hubbewegung relativ zueinander verlagerbare Elemente, wobei ein Fangzylinder (1) nach einem der Ansprüche 1 bis 11 derart zwischen den Elementen angeordnet ist, dass das Gehäuse (2) des Fangzylinders (1) mit einem der Elemente und die Kolbenstange (3) des Fangzylinders (1) mit dem anderen Element jeweils direkt oder indirekt gekoppelt ist.

## Claims

1. Catching cylinder for mounting between two elements of a load lifting device, in particular scissor lift table, which can be displaced relative to one another, comprising a housing (2), which can be coupled to one of the elements, as well as a piston rod (3) which can be coupled to the other element and is connected to a piston (22) which is guided in linear movement inside the housing (2) to form a first fluid chamber (23) and a second fluid chamber (24), wherein a shutoff valve (18) which is arranged in a connection between the two fluid chambers (23, 24) is designed to shut off the fluid volume stream, resulting from a passive displacement of the piston (22), between the fluid chambers (23, 24) when a response value is exceeded,
**characterised by**
a fluid reservoir (30) wherein the housing (2) has a first end section (11) and a second end section (31), opposite the first end section (11), in which the fluid reservoir (30) is formed.

2. Catching cylinder according to claim 1,
**characterised in**
**that** the housing (2) has a cylinder tube (8) guiding the piston (22), as well as a tubular body (9) which engages round an end of the cylinder tube (8) facing the second end section (31), wherein the fluid reservoir (30) has a chamber base (33) which is arranged inside the tubular body (9) and is displaceable in, as well as opposite, a longitudinal direction (x) of the piston rod (3), wherein the chamber base is supported via a counter pressure element (34), in particular designed as a spring element, on a cover (32) which closes the tubular body (9) towards its free end (6).

3. Catching cylinder according to claim 2,
**characterised in**
**that** the chamber base (33) is coupled to a measuring device (38) in such a way that a fluid volume which decreases in total inside the catching cylinder (1) can be detected, in particular a signal for this can be generated.

4. Catching cylinder according to one of claims 1 to 3,
**characterised by**
a valve block (10) which is connected via a conduit (17) to the second fluid chamber (24) and contains the shutoff valve (18), as well as by a housing passage which is arranged in the first end section (11) of the housing (2) and is connected to the first fluid chamber (23), wherein the valve block (10) has a receiving opening (12) in which the first end section (11) of the housing (2) is mounted so that a valve block channel arranged in the valve block (10) is connected in fluid-conveying manner to the housing passage.

5. Catching cylinder according to claim 4;
**characterised in**
**that** an inner face (25) of the receiving opening (12) of the valve block (10) facing the first end section (11) of the housing (2), and/or an outer face (27) of the first end section (11) facing the inner face (25) of the receiving opening (12) has/have a groove (26, 28) wherein the valve block channel and/or the housing passage is/are arranged inside the groove/s (26, 28).

6. Catching cylinder according to claim 5,
**characterised by**
a rotatably designed arrangement of the valve block (10) on the housing (2) wherein the groove or grooves (26, 28) is/are designed surrounding the first end section (11) of the housing (2) so that the housing passage and the valve block channel are in fluid-conveying connection with one another via the groove/s (26, 28) independently of the alignment of the valve block (10) relative to the housing (2).

7. Catching cylinder according to one of claims 4 to 6,
**characterised by**
a switching element (15) arranged in or on the valve block (10) wherein the switching element (15) is designed to detect a rise in pressure resulting from the shutting-off of the shutoff valve (18), in particular is designed to generate a signal for this.

8. Catching cylinder according to one of claims 4 to 7,
**characterised in**
**that** the tubular body (9) and/or the valve block (10) is/are detachably connected to the cylinder tube (8).

9. Catching cylinder according to one of claims 4 to 8,
**characterised by**
an arrangement of the shutoff valve (18) in or on the valve block (10) such that the latter in the installed state can be adjusted as regards its response value which triggers the shutting off of the shutoff valve (18).

10. Catching cylinder according to one of claims 1 to 9,
**characterised by**
an actively controllable closing valve (14) which is arranged in or on the valve block (10) wherein the closing valve (14) is designed to shut off the fluid flow, resulting from the passive displacement of the piston 22, between the fluid chambers (23, 24) independently of exceeding the response value for the fluid volume flow.

11. Catching cylinder according to one of claims 4 to 10,
**characterised by** an actively controllable discharge valve (16) which is arranged in or on the valve block (10) wherein the discharge valve (16) is designed to enable the fluid flow, shut off in the activated state of the shutoff valve (18), between the fluid chambers (23, 24) past the shutoff valve (14) .

12. Load lifting device, in particular a scissor lift table, comprising at least two elements which are displaceable relative to one another during a lifting movement, wherein a catching cylinder (1) according to one of claims 1 to 11 is arranged between the elements so that the housing (2) of the catching cylinder (1) is connected directly or indirectly to one of the elements and the piston rod (3) of the catching cylinder (1) is coupled directly or indirectly to the other element.

## Revendications

1. Cylindre de retenue, destiné à être disposé entre deux éléments d'un dispositif de levage, en particulier d'une table élévatrice à ciseaux, comprenant un boitier (2) pouvant être couplé avec l'un des éléments, ainsi qu'une tige de piston (3), qui, pouvant être couplée avec l'autre élément, est reliée à un piston (22) déplaçable linéairement pour former une première chambre de fluide (23) et une deuxième chambre de fluide (24) dans le boitier (2), sachant qu'une valve d'arrêt (18), disposée dans une liaison entre les deux chambres de fluide (23, 24), est conçue pour arrêter, entre les chambres de fluide (23, 24), le courant de fluide volumétrique, résultant du déplacement passif du piston (22) lors du dépassement d'une valeur de réponse,
**caractérisé par**
un réservoir de fluide (30), sachant que le boitier (2) possède une première extrémité (11) et une deuxième extrémité (31), située à l'opposé de la première extrémité (11), dans laquelle le réservoir de fluide (30) est formé.

2. Cylindre de retenue selon la revendication 1,
**caractérisé en ce que**
le boitier (2) présente un tube de cylindre (8), qui guide le piston (22), ainsi qu'un corps de cylindre (9), qui entoure une extrémité du tube de cylindre (8) orientée vers la deuxième extrémité (31), sachant que le réservoir de fluide (30) possède une sol de chambre (33), qui, disposé à l'intérieur du corps de cylindre (9) et pouvant être déplacé dans ainsi qu'à l'opposé d'une direction longitudinale (8) de la tige de piston (3), est soutenu, par l'intermédiaire d'un élément de contrepression (34), en particulier réalisé sous la forme d'un élément faisant ressort, par un couvercle (32), qui ferme le corps de cylindre (9) vers son extrémité libre (6).

3. Cylindre de retenue selon la revendication 2,
caractérisé en ce
le sol de chambre (33) est couplé avec un moyen de mesure (38) de sorte qu'un volume de fluide dégradant puisse être détecté à l'intérieur du cylindre de retenue (1), en particulier qu'un signal s'y rapportant puisse être généré.

4. Cylindre de retenue selon l'une des revendications 1 à 3,
**caractérisé par**
un bloc de vannes, qui est relié à la deuxième chambre de fluide (24) par l'intermédiaire d'une conduite (17) et présente la vanne d'arrêt (18), ainsi que par un passage à travers le boitier (2) qui est disposé dans la première extrémité (11) du boitier (2) et est relié à la première chambre de fluide (23), sachant que le bloc de vannes (10) possède une ouverture de réception, dans laquelle est disposée la première extrémité (11) du boitier (2) de sorte qu'un canal de bloc de soupapes, disposé dans le bloc de vannes (10) soit relié au passage à travers le boitier pour la conduite du fluide.

5. Cylindre de retenue selon la revendication 4,
**caractérisé en ce que**
une première surface intérieure (25) de l'ouverture de réception (12) du bloc de vannes (10), orientée vers la première extrémité (11) du boitier (2), et/ ou surface extérieure (27) de la première extrémité (11), orientée vers la surface intérieure (25) de l'ouverture de réception (12), possèdent / possède une rainure (26, 28), sachant que le canal du bloc de vannes et / ou le passage à travers le boitier sont / est disposés à l'intérieur de la / des rainure/s (26, 28).

6. Cylindre de retenue selon la revendication 5,
**caractérisé par**
une disposition rotative du bloc de vannes (10) sur le boitier (2), sachant que la / les rainure/s (26, 28) est / sont formée/s tout autour de la première extrémité (11) du boitier (2) de sorte que le passage à travers le boitier et le canal du bloc de vannes soient reliés ensemble, en conduction de fluide, par l'intermédiaire de la / des rainure/s (26, 28), indépendamment de l'orientation du bloc de vannes (10) par rapport au boitier (2).

7. Cylindre de retenue selon l'une des revendications 4 à 6,
**caractérisé par**
un élément de commutation (15), disposé dans ou sur le bloc de vannes (10), sachant que l'élément de commutation (15) est conçu pour détecter une augmentation de pression résultant de la fermeture de la vanne d'arrêt (18), en particulier pour générer un signal s'y rapportant.

8. Cylindre de retenue selon l'une des revendications 4 à 7,
**caractérisé en ce que**
le corps de cylindre (9) et / ou le bloc de vannes (10) sont / est relié/s de manière amovible au tube de cylindre (8).

9. Cylindre de retenue selon l'une des revendications 4 à 8,
**caractérisé par**
une disposition de la vanne d'arrêt (18) dans ou sur le bloc de vannes (10) de sorte que celle-ci, à l'état monté, puisse être réglée en ce qui concerne sa valeur de réponse qui déclenche la fermeture de la vanne d'arrêt (18) .

10. Cylindre de retenue selon l'une des revendications 1 à 9,
**caractérisé par**
une vanne de fermeture (14) commandée activement, laquelle est disposée dans ou sur le bloc de vannes (10), sachant que la vanne de fermeture (14) est conçue pour fermer entre les chambres de fluide (23, 24) le courant de fluide volumétrique résultant du déplacement passif du piston (22), indépendamment du surpassement de la valeur de réponse pour le courant de fluide volumétrique.

11. Cylindre de retenue selon l'une des revendications 4 à 10,
**caractérisé par**
une vanne de décharge (16) activement commandée, laquelle est disposée dans ou sur le bloc de vannes (10), sachant que la vanne de décharge (16) est conçue pour permettre au courant de fluide, arrêté par la vanne d'arrêt (18) à l'état actif, entre les deux chambres de fluide (23, 24), de passer outre la vanne d'arrêt (14).

12. Dispositif de levage, en particulier table élévatrice à ciseaux, comprenant au moins deux éléments pouvant être déplacés l'un par rapport à l'autre pendant un mouvement de levage, sachant qu'un cylindre de retenue (1) selon l'une des revendications 1 à 11, est disposé entre les éléments de sorte que le boitier (2) du cylindre de retenue (1) soit couplé avec l'un des éléments et la tige de piston (3) du cylindre de retenue (1) avec l'autre élément, chacun directement ou indirectement.
